# EUROPEAN PATENT APPLICATION

(11) **EP 3 392 846 A1**
(43) Date of publication of application: **24.10.2018**
(21) Application number: 17199203.5
(22) Date of filing: 30.10.2017
(51) Int. Cl.: G07F 17/00, G07C 9/00, B60L 11/18, B62M 6/00

(54) **VEHICLE CONTROL METHOD, DEVICE AND SYSTEM AND VEHICLE**

(30) Priority: 18.04.2017 CN 201710254201
(71) Applicant: Beijing Mobike Technology Co., Ltd., 100191 Haidan District, Beijing (CN)
(72) Inventor: JIN, Hongdu, BEIJING, 100191 (CN); YANG, Zhongjie, BEIJING, 100191 (CN); WANG, Depi, BEIJING, 100191 (CN)
(74) Representative: Cabinet Bleger-Rhein-Poupon

(57) **Abstract**

The present invention discloses a vehicle control method, device and system, and a vehicle. The method is implemented by the vehicle control device and comprises the following steps: establishing a connection channel with a target vehicle; sending an unlocking request to the target vehicle via the connection channel to trigger the target vehicle to determine whether to open a lock located thereon; and after the lock is opened, outputting electric energy to the target vehicle via the connection channel to provide at least part of power that supports the target vehicle to run. According to the present invention, it is simple and convenient to control the target vehicle. Furthermore, physical strength can be saved for the user who travels using the target vehicle. Therefore, the user experience is enhanced.

## Description

### FIELD OF THE INVENTION

The present invention relates to the field of vehicle control, and in particular, to a vehicle control method, device and system, and a vehicle.

### BACKGROUND OF THE INVENTION

With the development of Internet technology and a shared economic mode, shared travel services to provide users with bicycles and other means of transport, such as shared bicycles have come into being. By means of the shared bicycle services, the user can travel by riding a bicycle rented in a time-sharing rental mode, which is very convenient and greatly enriches the user's travel experience while achieving the purposes of low carbon, environmental friendliness and green travel.

In existing shared travel service control systems, e.g., in a shared bicycle control system, it is common to identify a bicycle desired to be rented in such as way that a user logs in an APP (Application) of a shared bicycle, which has been installed on a smart terminal, by scanning a two-dimensional code in an APP interface, and then operate on the basis of the APP interface to perform communication with a backend server in the shared bicycle control system. The bicycle desired to be rented is controlled by the backend server for renting the bicycle. Therefore, it is necessary to download the shared bicycle APP in advance if the user wants to acquire the shared bicycle service. In addition, each time he/she rents a bicycle, it is necessary to make an interaction with the backend server through APP operations. Therefore, more operations are required and the user experience is affected. Especially for the aged who is not familiar with the use of smart terminals, it is difficult to install and use an APP through the smart terminals to enjoy the shared bicycle service. At the same time, in places with poor coverage of a communication network, it is unable to guarantee a stable communication between the smart terminal and the backend server, thereby failing to achieve the purpose of travel by renting a bicycle on the basis of APP operations. In addition, in the current shared bicycle service, the user can ride the bicycle completely depending on manpower, and it will become a burden in terms of the user's physical strength, and is not appropriate for long distance travels.

Therefore, the inventor believes that it is necessary to improve the problems existing in the above-described prior art.

### SUMMARY OF THE INVENTION

The present invention is directed to provide a novel technical solution for vehicle control.

According to the first embodiment of the present invention, there is provided a vehicle control method, which is implemented by a vehicle control device. The method comprises the following steps: establishing a connection channel with a target vehicle; sending an unlocking request to the target vehicle via the connection channel, and triggering the target vehicle to determine whether to open a lock located thereon; and after the lock is opened, outputting electric energy to the target vehicle via the connection channel to provide at least part of power that supports the target vehicle to run.

Optionally, the connection channel is established by forming a physical contact with the target vehicle.

Optionally, the step of triggering the target vehicle to determine whether to open the lock includes: generating the unlocking request according to an identifier acquired in advance, the identifier being used for identifying an identity of the vehicle control device; sending the unlocking request to the target vehicle via the connection channel, and triggering the target vehicle to check according to the identifier and open the lock after the checking succeeds.

Optionally, the method further includes acquiring a pre-assigned identifier and storing it locally for generating the unlocking request.

Optionally, the connection channel includes a communication channel and a power supply channel, wherein the communication channel is used for communicating with the target vehicle to execute the step of triggering the target vehicle to unlock; the power supply channel is used for outputting electric energy to the target vehicle to execute the step of providing power.

According to the second embodiment of the present invention, there is provided a vehicle control method, which is implemented by a target vehicle. The method comprises the following steps: establishing a connection channel with a vehicle control device under the control the vehicle control device; determining whether to open a lock located on the target vehicle in response to an unlocking request sent by the vehicle control device via the connection channel; and after the lock is opened, receiving the electric energy come from the vehicle control device via the connection channel to convert the electric energy into at least part of power that supports the target vehicle to run.

Optionally, the connection channel is established by forming a physical connection with the vehicle control device under the control of the vehicle control device.

Optionally, the step of determining whether to open the lock located on the target vehicle includes: in response to the unlocking request sent by the vehicle control device via the connection channel, checking according to the identifier included in the unlocking request, the identifier being used for identifying an identity of the vehicle control device; and opening the lock after confirming that the identifier meets a predetermined unlocking condition upon checking.

Optionally, the step of determining whether to open the lock located on the target vehicle includes: in response to the unlocking request sent by the vehicle control device via the connection channel, forwarding the unlocking request to a server, for the server to check according to the identifier included in the unlocking request to determine whether to send an unlocking instruction to the target vehicle, the identifier being used for identifying an identity of the vehicle control device; and opening the lock in response to the received unlocking instruction.

Optionally, the connection channel includes a communication channel and a power supply channel, wherein the communication channel is used for communicating with the vehicle control device to execute the unlocking checking step; the power supply channel is used for receiving the electric energy come from the vehicle control device to execute the power reception step.

According to the third embodiment of the present invention, there is provided a vehicle control method, comprising the following steps: in response to the unlocking request from the vehicle control device forwarded by the target vehicle, checking according to the identifier included in the unlocking request, the identifier being used for identifying an identity of the vehicle control device; and after confirming that the identifier meets a predetermined unlocking condition upon checking, sending an unlocking instruction to the target vehicle to trigger the target vehicle to open the lock located thereon.

According to the fourth embodiment of the present invention, there is provided a vehicle control device, comprising: a connection unit used for establishing a connection channel with a target vehicle; an unlocking unit used for sending an unlocking request to the target vehicle via the connection channel, and triggering the target vehicle to determine whether to open a lock located thereon; and a power-assisting unit used for, after the lock is opened, outputting electric energy to the target vehicle via the connection channel to provide at least part of power that supports the target vehicle to run.

Optionally, the connection unit is used for establishing the connection channel by forming a physical contact with the target vehicle.

Optionally, the unlocking unit includes: a means used for generating the unlocking request according to an identifier acquired in advance, the identifier being used for identifying an identity of the vehicle control device; and a means used for, sending the unlocking request to the target vehicle via the connection channel, and triggering the target vehicle to check according to the identifier and open the lock after the checking succeeds.

Optionally, the device further includes a storage unit used for acquiring a pre-assigned identifier and storing it locally for generating the unlocking request.

Optionally, the connection channel includes a communication channel and a power supply channel, wherein the connection unit includes a communication interface used for establishing the communication channel for the unlocking unit to communicate with the target vehicle to execute the step of triggering the target vehicle to unlock; and a power supply interface used for establishing the power supply channel for the power-assisting unit to output electric energy to the target vehicle to execute the step of providing power.

According to the fifth embodiment of the present invention, there is provided a vehicle-mounted device, comprising: a controlled connection unit used for establishing a connection channel with a vehicle control device under the control of the vehicle control device; an unlocking checking unit used for, in response to an unlocking request sent by the vehicle control device via the connection channel, determining whether to open a lock of the target vehicle; and a auxiliary power reception unit used for, after the lock is opened, receiving electric energy come from the vehicle control unit via the connection channel to convert the electric energy to at least part of power that supports the target vehicle to run.

Optionally, the controlled connection unit is used for establishing the connection channel by forming a physical connection with the vehicle control device under the control of the vehicle control device.

Optionally, the unlocking checking unit includes: a means used for, in response to the unlocking request sent by the vehicle control device via the connection channel, checking according to the identifier included in the unlocking request, the identifier being used for identifying an identity of the vehicle control device; and a means used for opening the lock after confirming that the identifier meets a predetermined unlocking condition upon checking.

Optionally, the unlocking checking unit includes: a means used for, in response to the unlocking request sent by the vehicle control device via the connection channel, forwarding the unlocking request to a server, for the server to check according to the identifier included in the unlocking request to determine whether to send an unlocking instruction to the target vehicle, the identifier being used for identifying an identity of the vehicle control device; and a means used for opening the lock in response to the received unlocking instruction.

Optionally, the connection channel includes a communication channel and a power supply channel. The controlled connection unit includes a communication interface used for establishing the communication channel under the control of the vehicle control device, for the unlocking checking unit to communicate with the vehicle control device to execute the unlocking checking step; and a power supply interface used for establishing the power supply channel under the control of the vehicle control device, for the auxiliary power reception unit to receive the electric energy come from the vehicle control device to execute the power reception step.

According to the sixth embodiment of the present invention, there is provided a server, comprising: a checking unit used for checking according to the identifier included in the unlocking request in response to the unlocking request from the vehicle control device forwarded by the target vehicle, the identifier being used for identifying an identity of the vehicle control device; and an unlocking unit used for, after confirming that the identifier meets a predetermined unlocking condition upon checking, sending an unlocking instruction to the target vehicle to trigger the target vehicle to open the lock located thereon.

According to the seventh embodiment of the present invention, there is provided a vehicle, comprising a lock; and the vehicle-mounted device according to the fifth embodiment of the present invention.

According to the eighth embodiment of the present invention, there is provided a vehicle control system, comprising the vehicle control device according to the fourth embodiment of the present invention; and the vehicle provided according to the seventh embodiment of the present invention.

Optionally, the system further comprises the server provided according to the sixth embodiment of the present invention.

The inventors of the present invention have found the following problem. In the prior art, the vehicle is used by a sharing service, and troublesome operations that are performed on the basis of smart terminals, such as a mobile phone, are required. In addition, vehicle control cannot be effectively realized by the smart terminals in places with poor coverage of a communication network, and the defect that the user experience is affected resulting from a burden in user's physical strength will be caused by riding completely depending on manpower, etc. Therefore, the technical task to be achieved by the present invention or the technical problem to be solved by the present invention is an unintentional or unanticipated one of those skilled in the art, and accordingly, the present invention is a novel technical solution.

Other features and advantages of the present invention will become apparent from the following detailed description of exemplary embodiments of the present invention with reference to the accompanying drawings.

### BRIEF DESCRIPTION OF THE DRAWINGS

The accompanying drawings, which are incorporated in and constitute a part of the description, illustrate embodiments of the present invention and, together with the description thereof, serve to explain the principles of the present invention.
Fig. 1 is a flowchart illustrating a vehicle control method according to the first embodiment of the present invention.
Fig. 2 is a flowchart illustrating a vehicle control method according to the first embodiment of the present invention.
Fig. 3 is a block diagram illustrating a vehicle control device according to the first embodiment of the present invention.
Fig. 4 is a diagram illustrating hardware configuration of an electronic device 3000 that can implement the first embodiment of the present invention.
Fig. 5 is a flowchart illustrating a vehicle control method according to the second embodiment of the present invention.
Fig. 6 is a flowchart illustrating a vehicle control method according to the second embodiment of the present invention.
Fig. 7 is a flowchart illustrating a vehicle control method according to the second embodiment of the present invention.
Fig. 8 is a block diagram illustrating a vehicle-mounted device according to the second embodiment of the present invention.
Fig. 9 is a diagram illustrating hardware configuration of an electronic device 6000 that can implement the second embodiment of the present invention.
Fig. 10 is a block diagram illustrating a vehicle according to the second embodiment of the present invention.
Fig. 11 is a flowchart illustrating a vehicle control method according to the third embodiment of the present invention.
Fig. 12 is a block diagram illustrating a server according to the third embodiment of the present invention.
Fig. 13 is a diagram illustrating hardware configuration of the server that can implement the third embodiment of the present invention.
Fig. 14 is a schematic drawing illustrating a vehicle control system according to the fourth embodiment of the present invention.
Fig. 15 is a schematic drawing illustrating the vehicle control system according to the fourth embodiment of the present invention.
Fig. 16 is a schematic drawing illustrating an example of a vehicle control method according to the present invention.

### DETAILED DESCRIPTION OF THE EMBODIMENTS

Various exemplary embodiments of the present invention will now be described in detail with reference to the accompanying drawings. It should be noted that the relative arrangement, numerical expressions and numerical values of the components and steps set forth in these embodiments do not limit the scope of the present invention unless otherwise specified.

The following description of at least one exemplary embodiment is in fact merely illustrative and is in no way intended as a limitation to the present invention and its application or use.

Techniques, methods, and devices known to those of ordinary skill in the relevant art may not be discussed in detail but where appropriate, the techniques, methods, and devices should be considered as part of the description.

Among all the examples shown and discussed herein, any specific value should be construed as merely illustrative and not as a limitation. Thus, other examples of exemplary embodiments may have different values.

It should be noted that similar reference numerals and letters denote similar items in the accompanying drawings, and therefore, once an item is defined in a drawing, there is no need for further discussion in the accompanying drawings.

### <Hardware Configuration>

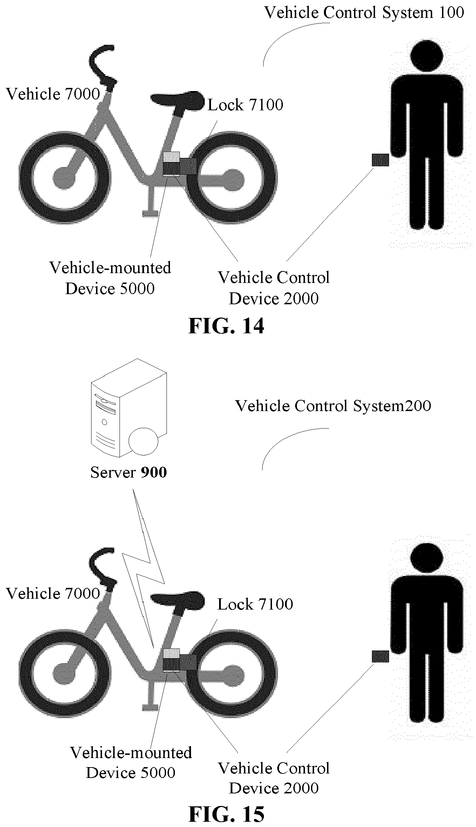

Fig. 15 is a system block diagram illustrating a vehicle control system 200 that can implement the embodiments of the present invention.

The vehicle control system 200 includes a vehicle control device 2000, a vehicle 7000 and a server 900.

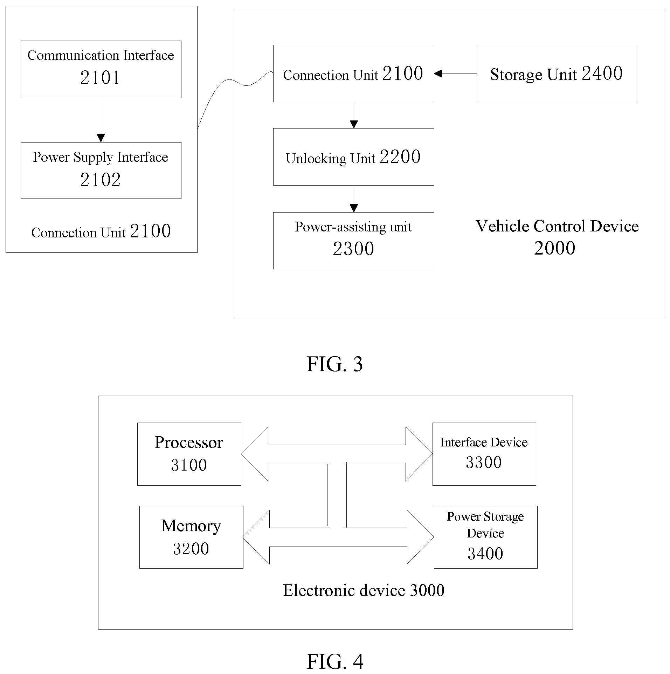

The hardware configuration of the vehicle control device 2000 may be an electronic device 3000 as shown in Fig. 4, the electronic device 3000 including a processor 3100, a memory 3200, an interface device 3300 and a power storage device 3400. The processor 3100 may a microprocessing unit MCU or a chip having a processing function, or the like. The memory 3200 includes, for example, a ROM (Read Only Memory), a RAM (Random Access Memory), a nonvolatile memory such as a hard disk, and the like. The interface device 3300 includes, for example, a power supply interface, a communication interface, a ground interface, and the like. The power storage device 3400 may be used for storing input electric energy.

In a specific example, the electronic device 3000 may be a portable power supply device or a battery.

The electronic device 3000 illustrated in Fig. 4 is merely illustrative and is in no way intended to impose any limitation on the present invention and its application or use. In an embodiment applied to the present invention, the memory 3200 of the electronic device 3000 is used for storing instructions, the instructions being used for controlling the processor 3100 to perform operations to interact with the vehicle 7000 via the interface device 3300 and execute any of the vehicle control methods provided by the embodiment of the present invention. Those skilled in the art may design instructions in accordance with the solution disclosed by the present invention. How to control the processor to perform operations through the instructions is well-known in the art, which is therefore not described in detail herein.

The vehicle 7000, as shown in Fig. 15, includes a lock 7100 and a vehicle-mounted device 5000.

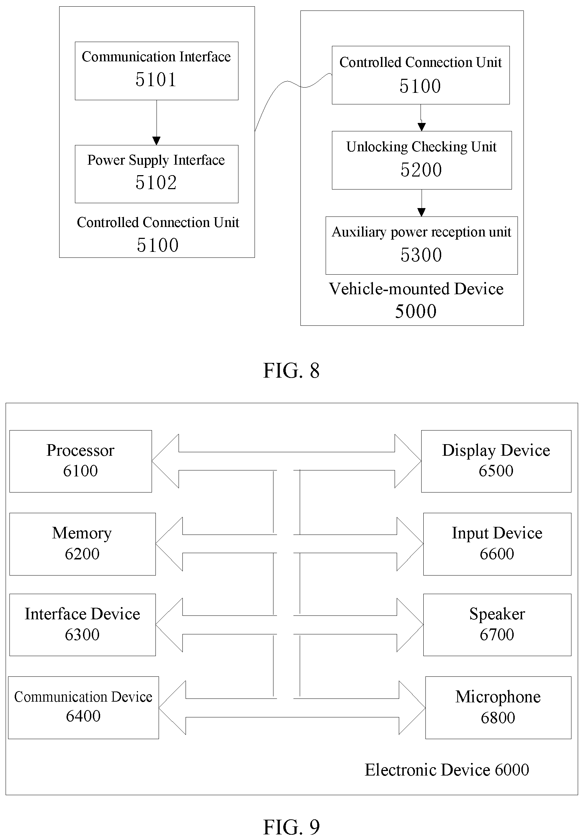

The hardware configuration of the vehicle-mounted device 5000 may be an electronic device 6000 as shown in Fig. 9. The electronic device 6000 may include a processor 6100, a memory 6200, an interface device 6300, a display device 6400, a communication device 6500, an input device 6600, a speaker 6700, a microphone 6800 and the like. The processor 6100 may be a microprocessing unit MCU or a chip having a processing function, or the like. The memory 6200 includes, for example, a ROM (Read Only Memory), a RAM (Random Access Memory), a nonvolatile memory such as a hard disk, and the like. The interface device 6300 includes, for example, a power supply interface, a communication interface, and the like. The communication device 6400 can be, for example, available for wired or wireless communication, specifically including Wifi communication, Bluetooth communication, 2G/3G/4G/5G communication, and the like. The display device 6500 is, for example, a liquid crystal display, a touch screen, or the like. The input device 6600 may include, for example, a touch screen, a keyboard, a somatosensory input, and the like. The speaker 6700 and the microphone 6800 may be used for being triggered to input/output voice messages.

In the present embodiment, neither specific positions of the vehicle-mounted device 5000 and the lock 7100 on the vehicle 7000 nor an entity relationship form of the vehicle-mounted device 5000 and the lock 7100 is limited. For example, the vehicle-mounted device 5000 and the lock 7100 as two separate units of the vehicle 7000 may form a physical connection, or the vehicle-mounted device 5000 and the lock 7100 may be integrated on an entity device and provided on the vehicle 7000.

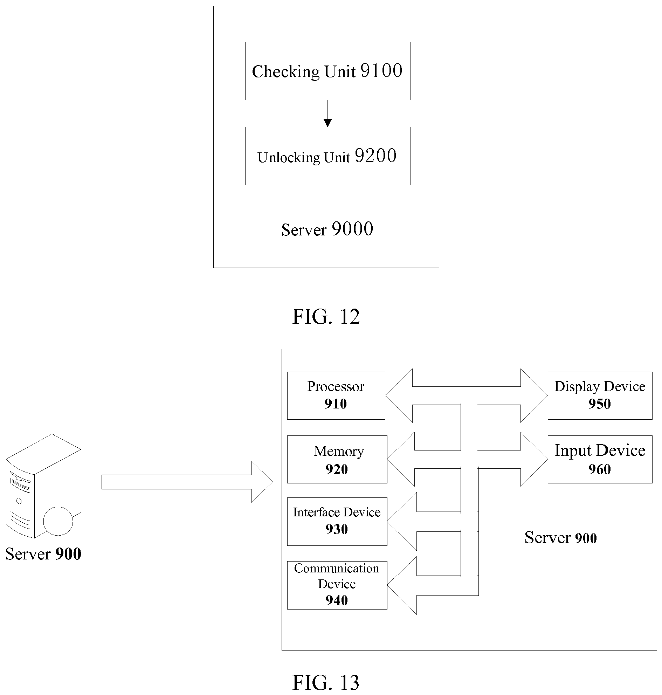

The server 900 may be, for example, a blade server, a cloud server, or the like. In an example, the server 900 may be a computer. In another example, the server 900, as illustrated in Fig. 13, may include a processor 910, a memory 920, an interface device 930, a communication device 940, a display device 950 and an input device 960. Although the server may also include a speaker, a microphone, etc., these components are not related to the present invention and are therefore omitted here. The processor 910 may be, for example, a central processing unit CPU, a microprocessing unit MPU, or the like. The memory 920 includes, for example, a ROM (Read Only Memory), a RAM (Random Access Memory), a nonvolatile memory such as a hard disk, and the like. The interface device 1300 includes, for example, a USB interface, a serial interface, and the like. The communication device 940 is, for example, available for wired or wireless communication. The display device 950 is, for example, a liquid crystal display. The input device 960 may include, for example, a touch screen, a keyboard, and the like.

The server illustrated in Fig. 13 is merely illustrative and is in no way intended to impose any limitation on the present invention and its application or use. In an embodiment applied to the present invention, the memory 920 of the server 9000 is used for storing instructions, the instructions being used for controlling the processor 910 to perform operations to execute any of the methods provided by the embodiment of the present invention. It should be appreciated by those skilled in the art that although a plurality of devices is illustrated for the server 900 in Fig. 13, the present invention may relate only to part of the devices. For example, the server 900 relates only to the processor 910 and the memory 920. Those skilled in the art may design instructions in accordance with the solution disclosed by the present invention. How to control the processor to perform operations through the instructions is well-known in the art, which is therefore not described in detail herein.

The vehicle control system 200 illustrated in Fig. 15 is merely illustrative and is in no way intended to impose any limitation on the present invention and its application or use. It should be understood by those skilled in the art that although the vehicle control system 2000 comprises a plurality of devices, the present invention relates only to part of devices, for example, the vehicle control system 200 applied to the present embodiment of the present invention may relate only to the vehicle 7000 and the vehicle control device 2000.

### <First Embodiment>

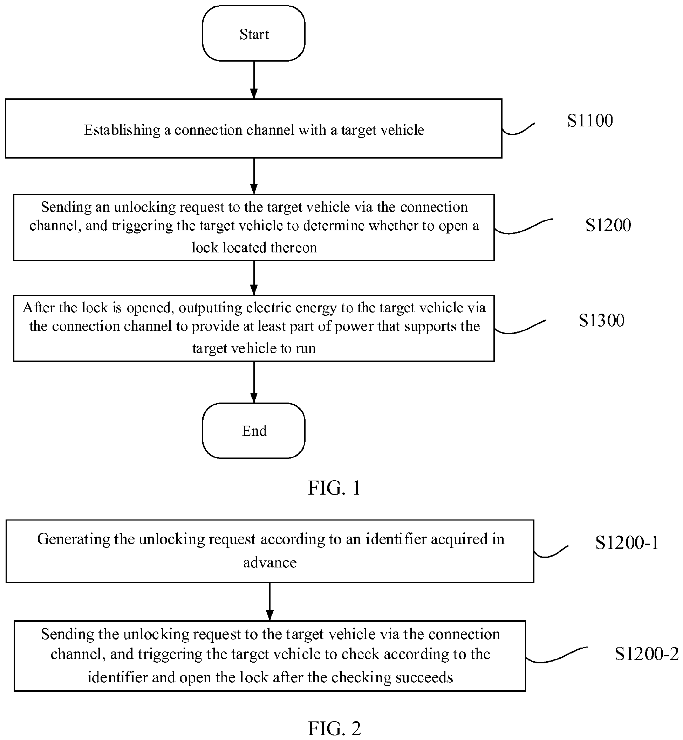

In the present embodiment, there is provided a vehicle control method, which is implemented by a vehicle control device and, as shown in Fig. 1 comprises the following steps S1100-S1300.

In step S1100, a connection channel is established with a target vehicle.

In the present embodiment, the target vehicle is a transportation vehicle the user desires to use in such ways of sharing service or rental. For example, a bicycle or a vehicle having a function similar to the bicycle is available.

The target vehicle is controlled via a connection channel established between the vehicle control device and the target vehicle.

Specifically, the connection channel is established by forming a physical contact with the target vehicle. For example, by means of correspondingly matched contacts, interfaces or other contact structures respectively arranged on the vehicle control device and the target vehicle, the vehicle control device can physically contact the target vehicle to establish the connection channel.

Of course, it is possible to establish the connection channel by forming a wireless connection between the vehicle control device and the target vehicle based on a public or private protocol having a function of supporting information transmission, electric energy transmission, etc.

In a specific example, the connection channel may include a communication channel and a power supply channel, wherein the communication channel is used for communicating with the target vehicle to execute the following step S1200 as shown in Fig. 1; the power supply channel is used for outputting electric energy to the target vehicle to execute the following step S1300 as shown in Fig. 1.

In this example, the connection channel may be only logically distinguished as the communication channel and the power supply channel. For example, the communication channel and the power supply channel may be two channels that are separated physically, or may be one channel that is separated logically, but integrated physically.

It is very simple and convenient for the user who desires to use the target vehicle to establish the operation for controlling the connection channel of the target vehicle, and the operation does not involve the download of a relevant APP and interface operations.

In addition, differing from the prior art in which an APP for implementing management and control needs to be installed in a smart terminal and an APP interface is operated to establish a communication connection with a backend server and is then in communication connection with the target vehicle via the backend server, in the present embodiment, the connection channel for controlling the target vehicle is established, without the need of realizing a multi-terminal communication model based on the exiting communication network, such that the risk that the target vehicle cannot be controlled owing to instability or poor coverage of the communication network can be avoided. The user experience of controlling the target vehicle can be enhanced.

After establishing the connection channel in the step S1100, it proceeds to a step S1200 in which an unlocking request is sent to the target vehicle via the connection channel, and the target vehicle is triggered to determine whether to open a lock located thereon.

The vehicle control device can send the unlocking request to the target vehicle directly via the connection channel to trigger the target vehicle to determine whether to open the lock located thereon. For users who desire to use the target vehicle, the process of triggering unlocking does not require any additional operation, and is automatic and imperceptible, and therefore the user experience is greatly enhanced. It is particularly suitable for users, such as the aged who are not accustomed to perform cumbersome operations on the APP interface via a smart terminal.

Specifically, the step S1200 may, as shown in Fig. 2, comprise the steps S1200-1 to S1200-2.

In step S1200-1, the unlocking request is generated according to an identifier acquired in advance, the identifier being used for identifying an identity of the vehicle control device.

Specifically, the identifier is a unique identifier for distinguishing the vehicle control device. For example, the identifier may be a device ID of the vehicle control device. Or, the identifier may be a user identifier of a user who is authorized to legally use the target vehicle, the user identifier being a unique identifier, such as a user ID, for distinguishing a user. In a more specific application, the device ID as the identifier may bind to the user ID. For example, the user ID may be bound to the device ID through a network or other physical channel, such as a convenience store. In addition, recharge, update of rental billing records and the like can be implemented based on the user ID so as to realize a further management of the vehicle control device corresponding to the device ID that is bound to the user ID. Furthermore, it is also possible to change the bound device ID or remove binding based on the user ID. Therefore, the control function of the vehicle control device is expanded, and the user experience is enriched.

In the present embodiment, the vehicle control method may further include: acquiring a pre-assigned identifier and storing it locally for generating the unlocking request.

For example, when the identifier is the device ID, the device ID may be assigned to the vehicle management device in advance to achieve a unique distinguishment of any vehicle management device. In addition, it is also possible to bind an initial corresponding user ID to the device ID during preassignment. Or, when the identifier is the user ID, it is possible to acquire the user ID assigned to the user who has been authorized to legally use the target vehicle in advance via a network.

The identifier is stored locally in the vehicle control device for generating the unlocking request. Specifically, for data safety, it is possible to perform encryption during storage by adopting an encryption algorithm, for example, an IC card encryption algorithm. Furthermore, the identifier may be locally stored in the vehicle control device. Other data, such as records of vehicle control by the vehicle control device, more particularly records that the user uses the target vehicle via the vehicle control device, may also be stored locally in the vehicle control device.

In step S1200-2, the target vehicle is triggered, sending the unlocking request to the target vehicle via the connection channel, and triggering the target vehicle to check according to the identifier and open the lock after the checking succeeds.

The unlocking request is generated on the basis of the identifier. The target vehicle is triggered, sending the unlocking request to the target vehicle via the connection channel, and triggering the target vehicle to check according to the identifier to determine whether to open the lock located thereon.

For example, when the identifier is the device ID, the predetermined unlocking condition is that the identifier is a legal device ID. When the target vehicle checks the device ID to determine that it is the legal device ID, the lock located thereon is opened, or the lock is not opened.

When the identifier is the user ID, the predetermined unlocking condition is that the user ID is an authorized legal user ID. When the target vehicle checks the user ID to determine that it is the authorized legal user ID (the user ID has paid a deposit, has no due bills, has a balance or the user ID is not illegal, etc.), the lock located thereon is opened, or the lock is not opened.

When the identifier is the device ID that is bound to the user ID, the predetermined unlocking condition is that whether the device ID is a legal device ID and the bound user ID is an authorized legal user ID (the user ID has paid a deposit, has no due bills, has a balance or the user ID is not illegal, etc.). When the target vehicle checks that the device ID is the legal device ID and the bound user ID is the authorized legal user ID, the lock located thereon is opened, or the lock is not opened;

Furthermore, in a specific application, the target vehicle may also decide whether to respond to the unlocking request based on the vehicle state while checking the identifier. For example, when the lock has been in an unlocked state or the lock is abnormal (the lock is low in electric energy, the lock has a fault, etc.), the target vehicle may not respond to the unlocking request to avoid abnormal use of the vehicle.

In step S1300, after the lock is opened, electric energy is output to the target vehicle via the connection channel to provide at least part of power that supports the target vehicle to run.

In the present embodiment, after the lock of the vehicle control device is opened, electric energy can be output to the target vehicle via the connection channel to provide at least part of power that supports the target vehicle to run. Physical strength can be saved for the user who travels using the target vehicle. The range of a travel distance of the target vehicle used by the user is expanded. The travel experience of the user is enriched.

In a specific application, the vehicle control device may also dynamically adjust a value of electric energy output to the target vehicle according to the electric energy that can be supplied by the vehicle control device, to dynamically adjust a range of power that supports the target vehicle to run. For example, in the provision of sufficient electric energy, it is possible to output more electric energy to the target vehicle to provide the target vehicle greater power that supports traveling. When the electric energy that can be supplied by the vehicle control device is insufficient, less electric energy is output to the target vehicle to provide the target vehicle less power that supports traveling, etc.

Furthermore, electric energy transmitted to the target vehicle by the vehicle control device can be used not only to provide at least part of power for supporting the target vehicle to run, but also to charge power consuming devices such as a lock or a vehicle-mounted device on the target vehicle, etc.

In the present embodiment, it is disclosed that the connection channel can be established by implementing the method as shown in Fig. 1 by the vehicle control management device, the unlocking request is sent to trigger unlocking of the target vehicle and the electric energy is transmitted to provide the target vehicle part of power that supports the target vehicle to run, and it will be readily appreciated that those skilled in the art may also obtain other expanded schemes from the technical revelation. For example, by disconnecting the connection channel through the vehicle control device, the target vehicle is triggered to turn off the lock to end the use of the target vehicle.

### <Vehicle Control Device>

In the present embodiment, there is also provided a vehicle control device 2000, which, as shown in Fig. 3, includes a connection unit 2100, an unlocking unit 2200 and a power-assisting unit 2300.Optionally, the vehicle control device further includes a storage unit 2400 and is used for implementing any of the vehicle control devices aggregatively provided by the present embodiment, which will not be repeated here again.

The vehicle control device 2000 includes: the connection unit 2100 used for establishing a connection channel with a target vehicle; the unlocking unit 2200 used for sending an unlocking request to the target vehicle via the connection channel, and triggering the target vehicle to check and determine whether to open a lock located thereon; and the power-assisting unit 2300 used for, after the lock is opened, outputting electric energy to the target vehicle via the connection channel to provide at least part of power that supports the target vehicle to run.

Optionally, the connection unit 2100 is used for establishing the connection channel by forming a physical contact with the target vehicle.

Optionally, the unlocking unit 2200 includes a means used for generating the unlocking request according to an identifier acquired in advance, the identifier being used for identifying an identity of the vehicle control device; and a means used for, sending the unlocking request to the target vehicle via the connection channel, and triggering the target vehicle to check according to the identifier and open the lock after the checking succeeds.

Optionally, the vehicle control device 2000 further includes a storage unit 2400 used for acquiring a pre-assigned identifier and storing it locally for generating the unlocking request.

Optionally, the connection channel includes a communication channel and a power supply channel. The connection unit 2100 includes a communication interface 2101 used for establishing the communication channel for the unlocking unit to communicate with the target vehicle to execute the step of triggering the target vehicle to unlock; and a power supply interface 2102 used for establishing the power supply channel for the power-assisting unit to output electric energy to the target vehicle to execute the step of providing power.

It should also be appreciated by those skilled in the art that the vehicle control device 2000 may be implemented in various ways. For example, the vehicle control device 2000 may be implemented by configuring the processor through the instructions. For example, the instructions may be stored in an ROM, and when the device is started, the instructions are read from the ROM into a programmable device to implement the vehicle control device 2000. For example, the vehicle control device 2000 may be cured to a dedicated device (e.g., an ASIC). The vehicle control device 2000 can be divided into separate units, or is implemented by integrating these separate units together. The vehicle control device 2000 may be implemented by one of the above-described various implementation ways, or may be implemented by a combination of two or more of the above-described various implementation ways.

In a specific example of the present embodiment, the hardware configuration of the vehicle control device 2000 may be an electronic device 3000 as shown in Fig. 4, the electronic device 3000 including a processor 3100, a memory 3200, an interface device 3300 and a power storage device 3400. The processor 3100 may be a microprocessing unit MCU or a chip having a processing function, or the like. The memory 3200 includes, for example, a ROM (Read Only Memory), a RAM (Random Access Memory), a nonvolatile memory such as a hard disk, and the like. The interface device 3300 includes, for example, a power supply interface, a communication interface, a ground interface and the like. The power storage device 3400 may be used for storing input electric energy.

In a specific example, the electronic device 3000 may be a portable power supply device or a battery.

The electronic device 3000 illustrated in Fig. 4 is merely illustrative and is in no way intended to impose any limitation on the present invention and its application or use. In an embodiment applied to the present invention, the memory 3200 of the electronic device 3000 is used for storing instructions, the instructions being used for controlling the processor 3100 to perform operations to interact with the target vehicle via the interface device 3300 and execute any of the vehicle control methods provided by the embodiment of the present invention. Those skilled in the art may design instructions in accordance with the solution disclosed by the present invention. How to control the processor to perform operations through the instructions is well-known in the art, which is therefore not described in detail herein.

The first embodiment of the present invention has been described above with reference to the accompanying drawings. In the present embodiment, there is provided the vehicle control method and device which, by establishing the connection channel with the target vehicle, triggering the unlocking of the target vehicle through the connection channel and outputting electric energy to the target vehicle via the connection channel to provide at least part of the power that supports the target vehicle to run after the lock is opened, realize the control of the target vehicle. The operation is simple and convenient, and the user experience is enhanced. In addition, it is unnecessary to realize a multi-terminal communication model based on the exiting communication network, such that the risk that the target vehicle cannot be controlled owing to instability or poor coverage of the communication network can be avoided. Furthermore, physical strength can be saved for the user who travels using the target vehicle. The range of a travel distance of the target vehicle used by the user is expanded. The travel experience of the user is enriched.

### <Second Embodiment>

### <Method>

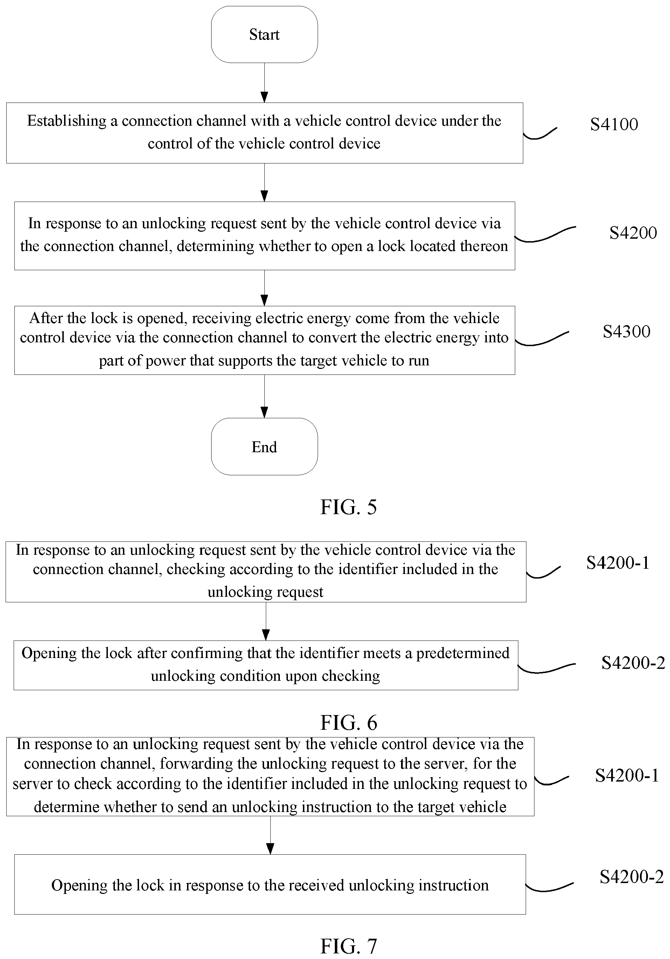

In the present embodiment, there is provided a vehicle control method, which, as shown in Fig. 5, is implemented by a target vehicle and comprises the following steps S4100-S4300:
In step S4100, a connection channel is established with the vehicle control device under the control of the vehicle control device.

In the present embodiment, the target vehicle is a transportation vehicle the user desires to use in such ways of sharing service or rental. The vehicle control device is the vehicle control device 2000 provided by the first embodiment, which will not be repeated here again.

The connection channel is established with the vehicle control device under the control of the vehicle control device to execute a control operation of the vehicle control device to trigger the target vehicle.

Specifically, the connection channel is established by forming a physical connection with the vehicle control device under the control of the vehicle control device. For example, by means of the correspondingly matched contacts, interfaces and other contact structures respectively arranged on the vehicle control device and the target vehicle, the connection channel is established by forming a physical contact with the vehicle control device under the control of the vehicle control device.

Of course, the connection channel may also be established by forming a physical contact with the vehicle control device under the control of the vehicle control device, based on a public or private protocol having a function of supporting information transmission, electric energy transmission, etc.

In a specific example, the connection channel may include a communication channel and a power supply channel, wherein the communication channel is used for communicating with the vehicle control device to execute the following step S4200 as shown in Fig. 5; the power supply channel is used for receiving electric energy come from the vehicle control device to execute the following step S4300 as shown in Fig. 5.

It is very simple and convenient for the user who desires to use the target vehicle that the target vehicle is directly controlled by a connection control device to establish the connection channel for controlling the target vehicle, and the operation does not involve the download of a relevant APP and interface operations.

In addition, differing from the prior art in which an APP for implementing management and control needs to be installed in a smart terminal and an APP interface is operated to establish a communication connection with a backend server and is then in communication connection with the target vehicle via the backend server, in the present embodiment, the connection channel for controlling the target vehicle is established, without the need of realizing a multi-terminal communication model based on the exiting communication network, such that the risk that the target vehicle cannot be controlled owing to instability or poor coverage of the communication network can be avoided. The user experience of controlling the target vehicle can be enhanced.

In step S4200, in response to an unlocking request sent by the vehicle control device via the connection channel, whether to open a lock located on the target vehicle is determined.

The vehicle control device may directly send the unlocking request to the target vehicle via the connection channel, and the target vehicle determines whether to open the lock located thereon in response to triggering the unlocking request. For users who desire to use the target vehicle, the process of triggering unlocking does not require any additional operation, and is automatic and imperceptible, and therefore the user experience is greatly enhanced. It is particularly suitable for users, such as the aged who are not accustomed to perform cumbersome operations on the APP interface via a smart terminal.

Specifically, the step S4200, as shown in Fig. 6, may comprise the steps S4200-1 to S4200-2.

In step S4200-1, in response to an unlocking request sent by the vehicle control device via the connection channel, checking is performed according to the identifier included in the unlocking request, the identifier being used for identifying an identity of the vehicle control device.

Specifically, the identifier is a unique identifier for distinguishing the vehicle control device. For example, the identifier may be a device ID of the vehicle control device. Or, the identifier may be a user identifier of a user who is authorized to legally use the target vehicle, the user identifier being a unique identifier, such as a user ID, for distinguishing a user. In a specific application, the device ID as the identifier may bind to the user ID. More specific examples about the identifier have been described in the first embodiment and will not be repeated here again.

Whether the identifier meets a predetermined unlocking condition is determined by checking the identifier by the target vehicle. The predetermined unlocking condition corresponds to the identifier. For example, when the identifier is a device ID, the predetermined unlocking condition is that the identifier is a legal device ID; when the identifier is a user ID, the predetermined unlocking condition is that the identifier is an authorized legal user ID (the user ID has paid a deposit, has no due bills, has a balance or the user ID is not illegal, etc.); when the identifier is a user ID and binds to the user ID, the predetermined unlocking condition is that the identifier is a legal device ID and the corresponding bound user ID is an authorized legal user (the user ID has paid a deposit, has no due bills, has a balance or the user ID is not illegal, etc.).

In step S4200-2, the lock is opened after confirming that the identifier meets a predetermined unlocking condition upon checking.

After the identifier meets the predetermined unlocking condition upon checking, the target vehicle will trigger opening of the lock located thereon, or the lock will be not opened.

Furthermore, in a specific application, the target vehicle may also decide whether to respond to the unlocking request based on the vehicle state while checking the identifier. For example, when the lock has been in an unlocked state or the lock is abnormal (the lock is low in electric energy, the lock has a fault, etc.), the target vehicle may not respond to the unlocking request to avoid abnormal use of the vehicle.

In another example, the step of checking the identifier in step S4200 may be implemented by the server and, as shown in Fig. 7, may comprise the following steps S4200-1 to S4200-2.

In step S4200-1, in response to the unlocking request sent by the vehicle control device via the connection channel, the unlocking request is forwarded to a server, for the server to check according to the identifier included in the unlocking request to determine whether to send an unlocking instruction to the target vehicle, the identifier being used for identifying an identity of the vehicle control device.

In this example, a specific example of the identifier has been described in detail in the example as shown in Fig. 5, and will not be repeated here again.

The identifier in the unlocking request forwarded by the target vehicle is verified by triggering the server to determine whether the identifier meets the predetermined unlocking condition. The predetermined unlocking condition corresponds to the identifier, and the specific example has been described in detail in the example as shown in Fig. 5, and will not be repeated here again.

In step S4200-2, the lock is opened in response to the received unlocking instruction.

The server will send an unlocking instruction to the target vehicle when determining that the identifier meets the predetermined unlocking condition upon checking; otherwise, it will not send the unlocking instruction. The target vehicle will open the lock located thereon in response to the received unlocking instruction.

Furthermore, in a specific application, the target vehicle may also decide whether to execute the unlocking instruction based on the vehicle state after receiving the unlocking instruction. For example, when the lock has been in an unlocked state or the lock is abnormal (the lock is low in electric energy, the lock has a fault, etc.), the target vehicle may not execute the unlocking instruction to avoid abnormal use of the vehicle.

In step S4300, after the lock is opened, the electric energy come from the vehicle control device is received via the connection channel to convert the electric energy into at least part of power that supports the target vehicle to run.

In the present embodiment, after the lock is opened, the target vehicle may receive electric energy come from the vehicle control unit via the connection channel to supply at least part of power that supports the target vehicle to run. Physical strength can be saved for the user who travels using the target vehicle. The range of a travel distance of the target vehicle used by the user is expanded. The travel experience of the user is enriched.

In the present embodiment, it is disclosed that the connection channel can be established by implementing the method as shown in Fig. 5 by the target vehicle, unlocking is triggered in response to the unlocking request and the electric energy is received and transmitted to provide the target vehicle a part of power that supports the target vehicle to run, and it will be readily appreciated that those skilled in the art may also obtain other expanded schemes from the technical revelation. For example, by disconnecting the connection channel under the control of the vehicle control device, the target vehicle is triggered to turn off the lock to end the use of the target vehicle.

### <Vehicle-mounted Device>

In the present embodiment, there is provided a vehicle-mounted device 5000, which, as shown in Fig. 8, is arranged on the target vehicle. The vehicle-mounted device includes a controlled connection unit 5100, an unlocking checking unit 5200 and a auxiliary power reception unit 5300, and is used for implementing any of the vehicle control methods provided in the present embodiment, which will not be repeated again.

The vehicle-mounted device 5000 includes the controlled connection unit 5100 used for establishing a connection channel with a vehicle control device under the control of the vehicle control device; the unlocking checking unit 5200 used for determining, in response to an unlocking request sent by the vehicle control device via the connection channel, whether to open a lock located on the target vehicle; and the auxiliary power reception unit 5300 used for , after the lock is opened, receiving electric energy come from the vehicle control unit via the connection channel to convert the electric energy to at least part of power that supports the target vehicle to run.

Optionally, the controlled connection unit 5100 is used for establishing the connection channel by forming a physical connection with the vehicle control device under the control of the vehicle control device.

Optionally, the unlocking checking unit 5200 includes a means used for, in response to the unlocking request sent by the vehicle control device via the connection channel, checking according to the identifier included in the unlocking request, the identifier being used for identifying an identity of the vehicle control device; and a means used for opening the lock after confirming that the identifier meets a predetermined unlocking condition upon checking.

Optionally, the unlocking checking unit 5200 includes a means used for, in response to the unlocking request sent by the vehicle control device via the connection channel, forwarding the unlocking request to a server, for the server to check according to the identifier included in the unlocking request to determine whether to send an unlocking instruction to the target vehicle, the identifier being used for identifying an identity of the vehicle control device; and a means used for opening the lock in response to the received unlocking instruction.

Optionally, the connection channel includes a communication channel and a power supply channel. The controlled connection unit 5100 includes a communication interface 5101 used for establishing the communication channel under the control of the vehicle control device, for the unlocking checking unit to communicate with the vehicle control device to execute the unlocking checking step; and a power supply interface 5102 used for establishing the power supply channel under the control of the vehicle control device, for the auxiliary power reception unit to receive the electric energy come from the vehicle control device to execute the power reception step.

It should also be appreciated by those skilled in the art that the vehicle-mounted device 5000 may be implemented in various ways. For example, the vehicle-mounted device 5000 may be implemented by configuring the processor through the instructions. For example, the instructions may be stored in an ROM, and when the device is started, the instructions are read from the ROM into a programmable device to implement the vehicle-mounted device 5000. For example, the vehicle-mounted device 5000 may be cured to a dedicated device (e.g., an ASIC). The vehicle-mounted device 5000 may be divided into separate units, or is implemented by integrating these separate units together. The vehicle-mounted device 5000 may be implemented by one of the above-described various implementation ways, or may be implemented by a combination of two or more of the above-described various implementation ways.

In a specific example of the present embodiment, the hardware configuration of the vehicle-mounted device 5000 may be an electronic device 6000 as shown in Fig. 9. The electronic device 6000 may include a processor 6100, a memory 6200, an interface device 6300, a display device 6400, a communication device 6500, an input device 6600, a speaker 6700, a microphone 6800 and the like. The processor 6100 may be a microprocessing unit MCU or a chip having a processing function, or the like. The memory 6200 includes, for example, a ROM (Read Only Memory), a RAM (Random Access Memory), a nonvolatile memory such as a hard disk, and the like. The interface device 6300 includes, for example, a power supply interface, a communication interface, and the like. The communication device 6400 can be, for example, available for wired or wireless communication, specifically including Wifi communication, Bluetooth communication, 2G/3G/4G/5G communication, or the like. The display device 6500 is, for example, a liquid crystal display, a touch screen, and the like. The input device 6600 may include, for example, a touch screen, a keyboard, a somatosensory input, and the like. The speaker 6700 and the microphone 6800 may be triggered to input/output voice messages.

The electronic device 6000 illustrated in Fig. 9 is merely illustrative and is in no way intended to impose any limitation on the present invention and its application or use. In an embodiment applied to the present invention, the electronic device 6000 may only include a processor 6100, a memory 6200 and an interface device 6300, wherein the memory 6200 of the electronic device 6300 is used for storing instructions, the instructions being used for controlling the processor 6100 to perform operations to interact with the vehicle control device via the interface device 6300 and execute any of the vehicle control methods provided by the embodiment of the present invention. It should be appreciated by those skilled in the art that although a plurality of devices is illustrated for the electronic device 6000 in Fig. 9, the present invention may relate only to part of the devices. For example, the electronic device 6000 relates only to the processor 6100 and the memory 6200. Those skilled in the art may design instructions in accordance with the solution disclosed by the present invention. How to control the processor to perform operations through the instructions is well-known in the art, which is therefore not described in detail herein.

### <Vehicle>

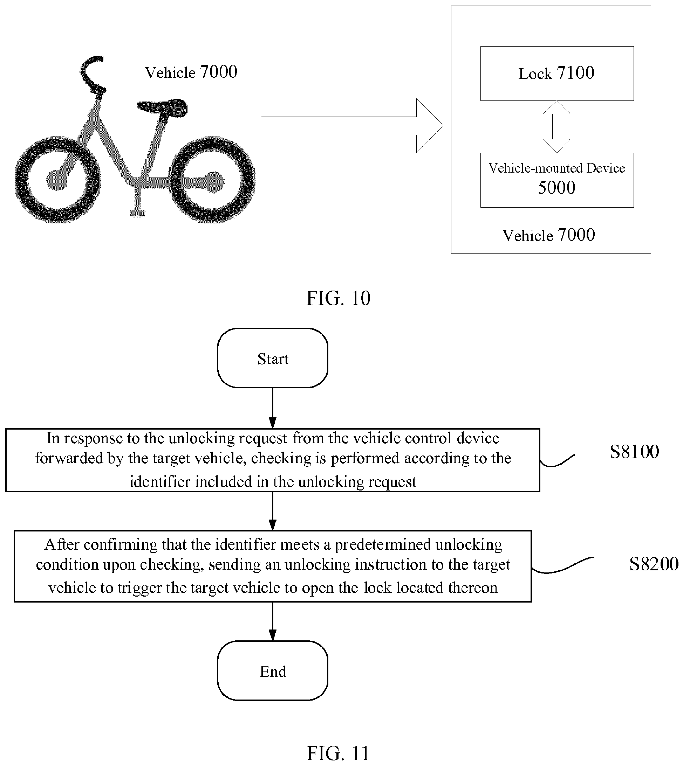

In the present embodiment, there is provided a vehicle 7000 which, as shown in Fig. 10, comprises a lock 7100 and any of the vehicle-mounted devices 5000 provided by the present embodiment.

In the present embodiment, neither specific positions of the vehicle-mounted device 5000 and the lock 7100 on the vehicle 7000 nor an entity relationship form of the vehicle-mounted device 5000 and the lock 7100 is limited. For example, the vehicle-mounted device 5000 and the lock 7100 as two separate units of the vehicle 7000 may form a physical connection, or the vehicle-mounted device 5000 and the lock 7100 may be integrated on an entity device and provided on the vehicle 7000.

The second embodiment of the present invention has been described above with reference to the accompanying drawings. In the present embodiment, there is provided the vehicle control method, the vehicle-mounted device and the vehicle which, by establishing the connection channel with the target vehicle under the control of the vehicle control device, responding to the unlocking request via the connection channel and receiving the electric energy come from the vehicle control device via the connection channel to convert the electric energy into at least part of power that supports the target vehicle to run, realize the use of the target vehicle by the user. The operation is simple and convenient, and the user experience is enhanced. In addition, it is unnecessary to realize a multi-terminal communication model based on the exiting communication network, such that the risk that the target vehicle cannot be controlled owing to instability or poor coverage of the communication network can be avoided. Furthermore, physical strength can be saved for the user who travels using the target vehicle. The range of a travel distance of the target vehicle used by the user is expanded. The travel experience of the user is enriched.

### <Third Embodiment>

### <Method>

In the present embodiment, there is provided a vehicle control method, which is executed by a server and, as illustrated in Fig. 11, comprises the steps S8100-8200.

In step S8100, in response to the unlocking request from the vehicle control device forwarded by the target vehicle, checking is performed according to the identifier included in the unlocking request, the identifier being used for identifying an identity of the vehicle control device.

In the present embodiment, the vehicle may be a vehicle 7000 provided in the second embodiment, and the vehicle control device is the vehicle control device 2000 provided in the first embodiment, which will not be repeated again.

Specifically, the identifier is a unique identifier for distinguishing the vehicle control device. For example, the identifier may be a device ID of the vehicle control device. Or, the identifier may be a user identifier of a user who is authorized to legally use the target vehicle, the user identifier being a unique identifier, such as user ID, for distinguishing a user. In a more specific application, the device ID may be used as the identifier and bind to the user ID. \More specific examples about the identifier have been described in the first embodiment and will not be repeated here again.

Whether the identifier meets the predetermined unlocking condition is determined by checking the identifier by the server. The predetermined unlocking condition corresponds to the identifier. For example, when the identifier is a device ID, the predetermined unlocking condition is that the identifier is a legal device ID; when the identifier is a user ID, the predetermined unlocking condition is that the identifier is an authorized legal user ID (the user ID has paid a deposit, has no due bills, has a balance or the user ID is not illegal, etc.); when the identifier is a user ID and binds to the user ID, the predetermined unlocking condition is that the identifier is a legal device ID and the corresponding bound user ID is an authorized legal user (the user ID has paid a deposit, has no due bills, has a balance or the user ID is not illegal, etc.).

In step S8200, after confirming that the identifier meets the predetermined unlocking condition upon checking, sending an unlocking instruction to the target vehicle to trigger the target vehicle to open the lock located thereon.

The server will send an unlocking instruction to the target vehicle when determining that the identifier meets the predetermined unlocking condition upon checking; otherwise, it will not send the unlocking instruction. Therefore, the unlocking of the target vehicle is triggered by checking the identifier.

### <Server>

In the present embodiment, there is provided a server 9000, which, as shown in Fig. 12, comprises a checking unit 9100 and an unlocking unit 9200 and is used for implementing the vehicle control method provided by the present embodiment, which will not be repeated here again.

The server 9000 includes a checking unit 9100 used for, in response to the unlocking request from the vehicle control device forwarded by the target vehicle, checking according to the identifier included in the unlocking request, the identifier being used for identifying an identity of the vehicle control device; and an unlocking unit 9200 used for, after determining that the identifier meets the predetermined unlocking condition upon checking, sending an unlocking instruction to the target vehicle to trigger the target vehicle to open the lock located thereon.

It should also be appreciated by those skilled in the art that the server 9000 may be implemented in various ways. For example, the server 9000 may be implemented by configuring the processor through instructions. For example, the instructions may be stored in an ROM, and when the device is started, the instructions are read from the ROM into a programmable device to implement the server 9000. For example, the server may be cured to a dedicated device (e.g., an ASIC). The server 9000 may be divided into separate units, or may be implemented by integrating these separate units together. The server 9000 may be implemented by one of the above-described various implementation ways, or may be implemented by a combination of two or more of the above-described various implementation ways.

Fig. 13 is a block diagram illustrating hardware configuration of the server 900 that can implement the embodiment of the present invention.

The server 900 may be, for example, a blade server, a cloud server, or the like. In an example, the server 900 may be a computer. In another example, the server 900, as illustrated in Fig. 13, may include a processor 910, a memory 920, an interface device 930, a communication device 940, a display device 950 and an input device 960. Although the server may also include a speaker, a microphone, etc., these components are not related to the present invention and are therefore omitted here. The processor 910 may be, for example, a central processing unit CPU, a microprocessing unit MPU, or the like. The memory 920 includes, for example, a ROM (Read Only Memory), a RAM (Random Access Memory), a nonvolatile memory such as a hard disk, and the like. The interface device 1300 includes, for example, a USB interface, a serial interface, and the like. The communication device 940 is, for example, available for wired or wireless communication. The display device 950 is, for example, a liquid crystal display. The input device 960 may include, for example, a touch screen, a keyboard, and the like.

The server illustrated in Fig. 13 is merely illustrative and is in no way intended to impose any limitation on the present invention and its application or use. In an embodiment applied to the present invention, the memory 920 of the server 900 is used for storing instructions, the instructions being used for controlling the processor 910 to perform operations to execute any of the methods provided by the embodiment of the present invention. It should be appreciated by those skilled in the art that although a plurality of devices is illustrated for the server 900 in Fig. 13, the present invention may relate only to part of the devices. For example, the server 900 relates only to the processor 910 and the memory 920. Those skilled in the art may design instructions in accordance with the solution disclosed by the present invention. How to control the processor to perform operations through the instructions is well-known in the art, which is therefore not described in detail herein.

The third embodiment of the present invention has been described above with reference to the accompanying drawings and examples. According to the present embodiment, there is provided the vehicle control method and the server which, by checking the identifier carried in the unlocking request of the vehicle control device, can trigger unlocking of the target vehicle. This process is automatic and imperceptible to the user, the operation is simple and convenient, and the user experience is enhanced.

### <Fourth Embodiment>

In the present embodiment, there is provided a vehicle control system 100, which, as shown in Fig. 14, comprises the vehicle control device 2000 provided in the first embodiment and the vehicle 7000 provided in the second embodiment of the present invention, and is used for implementing the vehicle control method provided in the embodiment of the present invention, which will not be repeated here again.

In the present embodiment, there is provided a vehicle control system 200, which, as shown in Fig. 15, comprises the vehicle control device 2000 provided in the first embodiment, the vehicle 7000 provided in the second embodiment and the server 9000 provided in the third embodiment of the present invention, and is used for implementing the vehicle control method provided in the present embodiment of the present invention, which will not be repeated herein again.

### <Example>

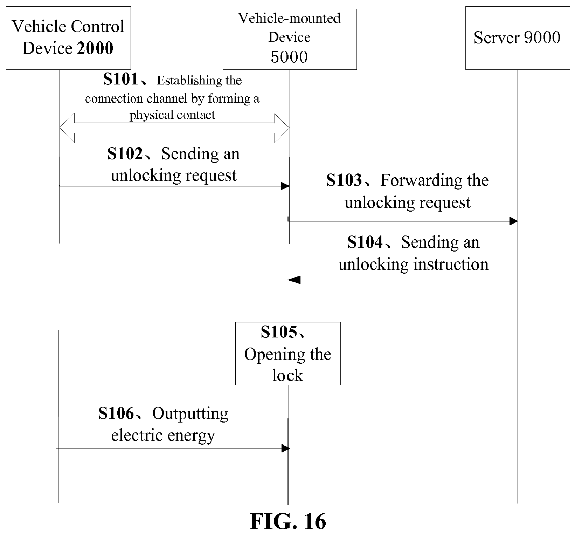

The vehicle control method provided in the present embodiment will be illustrated below with reference to Fig. 16. In this example, the vehicle control method is implemented based on the vehicle control system 200 as shown in Fig. 15. A vehicle-mounted device 5000 is provided on the vehicle 7000.

In step S101, the vehicle control device 2000 physically contacts the vehicle-mounted device 5000 to establish a connection channel. For example, the user may plug the vehicle control device 2000 to a contact structure correspondingly matched with the vehicle-mounted device 5000.

In step S102, the vehicle control device 2000 sends an unlocking request including an identifier to the device 5000, wherein the identifier is a device ID of the vehicle control device 5000 and is bound to a user ID.

In step S103, the vehicle-mounted device 5000 forwards the unlocking request to the server 9000.

In step S104, the server 9000 checks the identifier in the unlocking request to determine that the identifier belongs to a legal device ID, and the corresponding bound user ID belongs to an authorized legal user ID, and sends an unlocking instruction to the vehicle-mounted device 5000.

In step S105, the vehicle-mounted device 5000 triggers the vehicle 7000 to open the lock in response to the unlocking instruction.

In step S106, after the lock is opened, the vehicle-mounted control device 2000 supplies electric energy to the vehicle-mounted device 5000 to provide at least part of power that supports the vehicle 7000 to run.

In the present example, the user can acquire the vehicle control device 2000 by purchasing or rental or the like and acquires a vehicle sharing service by acquiring the vehicle control device 2000 to use the vehicle 7000.

The fourth embodiment of the present invention has been described above with reference to the accompanying drawings and examples. In the present embodiment, there is provided the vehicle control system which realizes the control of the vehicle, by establishing a connection channel with the vehicle via the vehicle control device, triggering the unlocking of the vehicle via the connection channel and outputting electric energy to the vehicle via the connection channel to provide at least part of power that supports the vehicle to run. The operation is simple and convenient, and the user experience is enhanced. In addition, it is unnecessary to realize a multi-terminal communication model based on the exiting communication network, such that the risk that the target vehicle cannot be controlled owing to instability or poor coverage of the communication network can be avoided. Furthermore, physical strength can be saved for the user who travels using the target vehicle. The range of a travel distance of the target vehicle used by the user is expanded. The travel experience of the user is enriched.

In the present embodiment, the technical solutions for vehicle control are provided in the following aspects.

According to the first aspect, there is provided a vehicle control method, which is implemented by a vehicle control device and comprises the following steps: establishing a connection channel with a target vehicle; sending an unlocking request to the target vehicle via the connection channel, and triggering the target vehicle to determine whether to open a lock located thereon; and after the lock is opened, outputting electric energy to the target vehicle via the connection channel to provide at least part of power that supports the target vehicle to run.

According to the second aspect, there is provided the method according to the first aspect, wherein the connection channel is established by forming a physical contact with the target vehicle.

According to the third aspect, there is provided the method according to the first aspect or the second aspect, wherein the step of triggering the target vehicle to determine whether to open the lock includes: generating the unlocking request according to an identifier acquired in advance, the identifier being used for identifying an identity of the vehicle control device; sending the unlocking request to the target vehicle via the connection channel, and triggering the target vehicle to check according to the identifier and open the lock after the checking succeeds.

According to the fourth aspect, there is provided the method according to the first aspect to the third aspect, further comprising the following steps: acquiring a pre-assigned identifier and storing it locally for generating the unlocking request.

According to the fifth aspect, there is provided the method according to the first aspect to the fourth aspect, wherein the connection channel includes a communication channel and a power supply channel, wherein the communication channel is used for communicating with the target vehicle to execute the step of triggering the target vehicle to unlock; the power supply channel is used for outputting electric energy to the target vehicle to execute the step of providing power.

According to the sixth aspect of the present invention, there is provided a vehicle control method, which is implemented by a target vehicle and comprises the following steps: establishing a connection channel with the vehicle control device under the control of a vehicle control device; in response to an unlocking request sent by the vehicle control device via the connection channel, determining whether to open a lock located on the target vehicle; an after the lock is opened, receiving the electric energy come from the vehicle control device via the connection channel to convert the electric energy into at least part of power that supports the target vehicle to run.

According to the seventh aspect, there is provided the method according to the sixth aspect, wherein the connection channel is established by forming a physical connection with the vehicle control device under the control of the vehicle control device.

According to the eighth aspect, there is provided the method according to the sixth aspect or the seventh aspect, the step of determining whether to open the lock located on the target vehicle includes: in response to the unlocking request sent by the vehicle control device via the connection channel, checking according to the identifier included in the unlocking request, the identifier being used for identifying an identity of the vehicle control device; and opening the lock after confirming that the identifier meets a predetermined unlocking condition upon checking.

According to the ninth aspect, there is provided the method according to any one of the sixth aspect to the eighth aspect, the step of determining whether to open the lock located on the target vehicle includes: in response to the unlocking request sent by the vehicle control device via the connection channel, forwarding the unlocking request to a server, for the server to check according to the identifier included in the unlocking request to determine whether to send an unlocking instruction to the target vehicle, the identifier being used for identifying an identity of the vehicle control device; and opening the lock in response to the received unlocking instruction.

According to the tenth aspect, there is provided the method according to any one of the sixth aspect to the ninth aspect, wherein the connection channel includes a communication channel and a power supply channel, wherein the communication channel is used for communicating with the vehicle control device to execute the unlocking checking step; the power supply channel is used for receiving the electric energy come from the vehicle control device to execute the power reception step.

According to the eleventh aspect of the present invention, there is provided a vehicle control method, which is implemented by a server and comprises the following steps: in response to the unlocking request from the vehicle control device forwarded by the target vehicle, checking according to the identifier included in the unlocking request, the identifier being used for identifying an identity of the vehicle control device; and after confirming that the identifier meets a predetermined unlocking condition upon checking, sending an unlocking instruction to the target vehicle to trigger the target vehicle to open the lock located thereon.

According to the twelfth aspect, there is provided a vehicle control device, comprising a connection unit used for establishing a connection channel with a target vehicle; an unlocking unit used for sending an unlocking request to the target vehicle via the connection channel, and triggering the target vehicle to determine whether to open a lock located thereon; and a power-assisting unit used for, after the lock is opened, outputting electric energy to the target vehicle via the connection channel to provide at least part of power that supports the target vehicle to run.

According to the thirteenth aspect, there is provided the device according to the twelfth aspect, wherein the connection unit is used for establishing the connection channel by forming a physical contact with the target vehicle.

According to the fourteenth aspect, there is provided the device according to any one of the twelfth aspect or the thirteenth aspect, the unlocking unit includes a means used for generating the unlocking request according to an identifier acquired in advance, the identifier being used for identifying an identity of the vehicle control device; and a means used for, sending the unlocking request to the target vehicle via the connection channel, and triggering the target vehicle to check according to the identifier and open the lock after the checking succeeds.

According to the fifteenth aspect, there is provided the device according to the twelfth aspect to the fourteenth aspect, further comprising a storage unit used for acquiring the pre-assigned identifier and storing it locally for generating the unlocking request.

According to the sixteenth aspect, there is provided the device according to any one of the twelfth aspect to the fifteenth aspect, wherein the connection channel includes a communication channel and a power supply channel; the connection unit includes a communication interface used for establishing the communication channel for the unlocking unit to communicate with the target vehicle to execute the step of triggering the target vehicle to unlock; and a power supply interface used for establishing the power supply channel for the power-assisting unit to output electric energy to the target vehicle to execute the step of providing power.

According to the seventeenth aspect, there is provided a vehicle-mounted device, which is provided on the target vehicle and comprises: a controlled connection unit used for establishing the connection channel with the vehicle control device under the control of the vehicle control device; an unlocking checking unit used for, in response to an unlocking request sent by the vehicle control device via the connection channel, determining whether to open a lock located on the target vehicle; and a auxiliary power reception unit used for, after the lock is opened, receiving electric energy come from the vehicle control unit via the connection channel to convert the electric energy to at least part of power that supports the target vehicle to run.

According to the eighteenth aspect, there is provided the device according to the seventeenth aspect, wherein the controlled connection unit is used for establishing the connection channel by forming a physical connection with the vehicle control device under the control of the vehicle control device.

According to the nineteenth aspect, there is provided the device according to the seventeenth aspect or the eighteenth aspect, wherein the unlocking checking unit includes a means used for, in response to the unlocking request sent by the vehicle control device via the connection channel, checking according to the identifier included in the unlocking request, the identifier being used for identifying an identity of the vehicle control device; and a means used for opening the lock after confirming that the identifier meets a predetermined unlocking condition upon checking.

According to the twentieth aspect, there is provided the device according to any of the seventeenth aspect to the nineteenth aspect, wherein the unlocking checking unit includes a means used for, in response to the unlocking request sent by the vehicle control device via the connection channel, forwarding the unlocking request to a server, for the server to check according to the identifier included in the unlocking request to determine whether to send an unlocking instruction to the target vehicle, the identifier being used for identifying an identity of the vehicle control device; and a means used for opening the lock in response to the received unlocking instruction.

According to the twenty first aspect, there is provided the device according to any one the seventeenth aspect to the twentieth aspect, wherein the connection channel includes a communication channel and a power supply channel; the controlled connection unit includes a communication interface used for establishing the communication channel under the control of the vehicle control device for the unlocking checking unit to communicate with the vehicle control device to execute the unlocking checking step; and a power supply interface used for establishing the power supply channel under the control of the vehicle control device, for the auxiliary power reception unit to receive the electric energy come from the vehicle control device to execute the power reception step.

According to the twenty second aspect, there is provided a server, comprising: a checking unit used for, in response to the unlocking request from the vehicle control device forwarded by the target vehicle, checking according to the identifier included in the unlocking request, the identifier being used for identifying an identity of the vehicle control device; and an unlocking unit used for, after confirming that the identifier meets a predetermined unlocking condition upon checking, sending an unlocking instruction to the target vehicle to trigger the target vehicle to open the lock located thereon.

According to the twenty third aspect, there is provided a vehicle, comprising: a lock; and the vehicle-mounted device according to any of the seventeenth aspect to the twentieth aspect.

According to the twenty fourth aspect, there is provided a vehicle control system, comprising the vehicle-mounted device according to any of the twelfth aspect to the sixteenth aspect; and the vehicle according to the twenty third aspect.

According to the twenty fifth aspect, there is provided the system according to the twenty fourth aspect, further comprising the server according to the twenty second aspect.

According to the twenty sixth aspect, there is provided a vehicle control device, comprising a memory used for storing instructions; and a processor used for executing the vehicle control method according to the first aspect to the fifth aspect through the instructions.

According to the twenty seventh aspect, there is provided a vehicle-mounted device, comprising a memory used for storing instructions; and a processor used for executing the vehicle control method according to the sixth aspect to the tenth aspect through the instructions.

According to the twenty eighth aspect, there is provided a server, comprising a memory used for storing instructions; and a processor used for executing the vehicle control method according to the eleventh aspect through the control of the instructions.

According to the twenty ninth aspect, there is provided a vehicle control system, comprising the vehicle control device according to the twenty sixth aspect; and the vehicle including the lock and the vehicle-mounted device according to the twenty seventh aspect.

According to the thirtieth aspect, there is provided the system according to the twenty ninth aspect, further comprising the server according to the twenty eighth aspect.

Those skilled in the art shall well know that, as electronic and information technologies such as large scale integrated circuit technologies develop and the trend that software are realized by hardware advances, it becomes difficult to distinguish software and hardware of computer systems, since any operation or execution of any instruction can be realized by software or hardware. Whether to realize a function of a machine using a software or hardware solution may depend on non-technical factors such as prices, speeds, reliability, storage capacity, change period etc. Therefore, a more direct and clear description manner of a technical solution to a person skilled in the fields of electronic and information technologies may be descriptions of the operations of the solution. When knowing the operations to be performed, those skilled in the art may directly design desired products based on considerations of the non-technical factors.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present invention is defined by the attached claims.

## Claims

1. A vehicle control method, **characterized in that**, it is implemented by a vehicle control device and comprises the following steps:
establishing a connection channel with a target vehicle;
sending an unlocking request to the target vehicle via the connection channel, and triggering the target vehicle to determine whether to open a lock located thereon; and
after the lock is opened, outputting electric energy to the target vehicle via the connection channel to provide at least part of power that supports the target vehicle to run.

2. The method according to claim 1, **characterized in that**,
the connection channel is established by forming a physical contact with the target vehicle.

3. The method according to claim 1 or 2, **characterized in that**, the step of triggering the target vehicle to determine whether to open the lock includes:
generating the unlocking request according to an identifier acquired in advance, wherein the identifier being used for identifying an identity of the vehicle control device; and
sending the unlocking request to the target vehicle via the connection channel, and triggering the target vehicle to check according to the identifier and open the lock after the checking succeeds.

4. The method according to any of claims 1 to 3, **characterized in that**, further comprising the following steps:
acquiring a pre-assigned identifier and storing it locally for generating the unlocking request.

5. The method according to any one of claims 1 to 4, **characterized in that**,
the connection channel includes a communication channel and a power supply channel, wherein
the communication channel is used for communicating with the target vehicle to execute the step of triggering the target vehicle to unlock ;
the power supply channel is used for outputting electric energy to the target vehicle to execute the step of providing power.

6. A vehicle control method, **characterized in that**, which is implemented by a target vehicle and comprises the following steps:
establishing a connection channel with the vehicle control device under the control of a vehicle control device;
in response to an unlocking request sent by the vehicle control device via the connection channel, determining whether to open a lock located on the target vehicle; and
after the lock is opened, receiving the electric energy come from the vehicle control device via the connection channel to convert the electric energy into at least part of power that supports the target vehicle to run.

7. The method according to claim 6, **characterized in that**,
the connection channel is established by forming a physical connection with the vehicle control device under the control of the vehicle control device.

8. The method according to claim 6 or 7, **characterized in that**, the step of determining whether to open the lock located on the target vehicle includes:
in response to the unlocking request sent by the vehicle control device via the connection channel, checking according to the identifier included in the unlocking request, the identifier being used for identifying an identity of the vehicle control device; and
opening the lock after confirming that the identifier meets a predetermined unlocking condition upon checking.

9. The method according to any one of claims 6 to 8, **characterized in that**, the step of determining whether to open the lock located on the target vehicle includes:
in response to the unlocking request sent by the vehicle control device via the connection channel, forwarding the unlocking request to a server for the server to check according to the identifier included in the unlocking request to determine whether to send an unlocking instruction to the target vehicle, the identifier being used for identifying an identity of the vehicle control device; and
opening the lock in response to the received unlocking instruction.

10. The method according to any one of claims 6 to 9, **characterized in that**,
the connection channel includes a communication channel and a power supply channel, wherein
the communication channel is used for communicating with the vehicle control device to execute the step of triggering the target vehicle to unlock;
the power supply channel is used for receiving the electric energy come from the vehicle control device to execute the step of providing power.

11. A vehicle control device, **characterized in that**, comprising:
a memory used for storing instructions; and
a processor used for executing the vehicle control method according to claims 1 to 5 through the instructions.

12. A vehicle-mounted device, **characterized in that**, comprising:
a memory used for storing instructions; and
a processor used for executing the vehicle control method according to claims 6 to 10 through the instructions.

13. A vehicle control system, **characterized in that**, comprising:
the vehicle control device according to claim 11; and
a vehicle including the lock and the vehicle-mounted device according to claim 12.
